# EUROPEAN PATENT APPLICATION

(11) **EP 0 846 850 A1**
(43) Date of publication of application: **10.06.1998**
(21) Application number: 97830620.7
(22) Date of filing: 26.11.1997
(51) Int. Cl.: F02D 19/02, F02D 19/06, F02B 69/04

(54) **Internal combustion engine having a LPG feeding system**

(30) Priority: 04.12.1996 IT TO960983
(71) Applicant: C.R.F. Societa' Consortile per Azioni, 10043 Orbassano (Torino) (IT)
(72) Inventor: Gozzelino, Riccardo, 10043 Orbassano (Torino) (IT); Audisio, Filippo, 10043 Orbassano (Torino) (IT); Ferrera, Massimo, 10043 Orbassano (Torino) (IT); Gianotti, Pietro, 10043 Orbassano (Torino) (IT); Lombardo, Gaetano, 10043 Orbassano (Torino) (IT)
(74) Representative: Notaro, Giancarlo

(57) **Abstract**

A LPG injection system for an internal combustion engines comprises a return conduit (6) which takes the LPG fed in excess to the injectors (2) back to the tank (5). In the return conduit (6) there is not interposed any pressure regulator. Furthermore this conduit (6) ends with a non-return valve (7) which prevents a flow within conduit (6) towards the rail (1) for feeding the LPG to the injectors (2).

## Description

The present invention relates to an internal combustion engine having a LPG feeding system, wherein said system comprises:
- a plurality of injectors respectively associated with the various cylinders of the engine,
- a feeding manifold or rail for feeding LPG to the injectors,
- a tank which can be filled with LPG,
- means for feeding LPG from the tank to the feeding rail while keeping the LPG substantially at a liquid state, said means including a pump for feeding LPG from the tank to said rail,
- a return conduit for taking the portion of LPG fed in excess to the injectors back to the tank,
- sensor means for sensing the pressure of the LPG fed to the injectors, and
- electronic control means for receiving signals coming from said sensor means for sensing the pressure of the LPG fed to the injectors and controlling the injector activation time accordingly.

A system of the above indicated type is disclosed in Italian patent application TO95A000064 as well as in the parallel European patent application EP-A-0 725 208 of the same applicant.

The above mentioned documents relate to an internal combustion engine adapted to operate selectively either with gasoline or with LPG and provided with two separate systems for feeding gasoline and LPG, in which the LPG feeding system has the above indicated features.

Yet in the solution previously proposed by the same applicant, the above mentioned electronic control means comprises a first electronic control unit of the type conventionally used in gasoline injection system, for controlling the gasoline injection, and a second electronic control unit adapted to modify the mode of operation of the first electronic control unit as a function of the LPG feeding characteristics, for controlling the LPG injection by means of said first electronic control unit.

Yet in the above mentioned previous solution proposed by the applicant, in the aforesaid return conduit there is interposed a pressure regulator, for throttling this conduit so that said pump generates a pressure increase from the pressure of LPG within the tank up to the pressure at which the LPG is fed to the injectors. With this pressure regulator there are associated means adapted to detect the pressure of the LPG within the tank, which is a function of the temperature, as well as to vary the degree of the throttling of the regulator accordingly, so as to keep the above mentioned pressure increase at a substantially constant level, which for instance may be of 2-3 bars. In this manner, whichever is the temperature of the LPG tank, the feeding pressure of the LPG to the injectors is always within the pressure range at which the injectors operate properly. Indeed, at very low temperatures (such as -20°C) at which the LPG pressure is of about 1 bar, the feeding pressure becomes of the order of 3-4 bars, whereas at high temperatures (50°C), at which the LPG pressure is of about 20 bars, the feeding pressure becomes of about 22-23 bars, the pressure range at which the conventional injectors operate properly being from 3 up to 23 bars.

While testing the feeding system which has formed the subject of the above mentioned previous application, the applicant has found however that the use of the above mentioned pressure regulator may give origin, in some cases, to engine malfunctions, particularly to the incapability of starting the engine again after a stop due to formation of steam bobbles within the regulator.

The object of the present invention is that of improving the previously proposed system while overcoming this drawback.

In view of achieving this object, the invention provides an engine of the above indicated type, characterized in that the above mentioned return conduit is not provided with any pressure regulator and is connected to the tank through a non-return valve adapted to prevent a flow within this conduit towards the LPG feeding rail.

The elimination of the pressure regulator does not give origin to any drawback, both because the injectors presently available now operate in a vary broad range (from 2 to 23 bars) and due to the adoption of said non-return valve at the tank. It is still to be noted that, although the elimination of the pressure regulator implies that operation with a constant pressure increase is not possible, this does not cause any inconvenience in the engine operation, since the pressure sensor downstream of the feeding pump attends to informing the electronic control unit about the LPG feeding pressure, so as to enable the engine to be regulated in the best possible way at any operating condition. At the same time, the elimination of the pressure regulator obviously provides a great simplification and a reduction in cost.

The invention will be now described with reference to the annexed drawing, given purely by way of non limiting example, which shows a diagram of the LPG feeding system of the engine according to the invention.

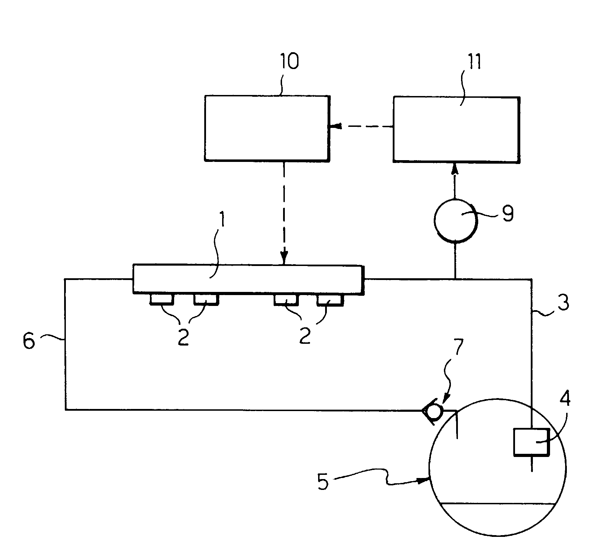

With reference to the figure, numeral 1 generally designates the manifold or "rail" for feeding LPG to four injectors 2 which are respectively associated with the four cylinders of a motor-vehicle internal combustion engine. The engine is provided with an injection feeding system adapted to operate selectively either with gasoline or LPG. In the drawing, the parts of the gasoline feeding system have not been illustrated, since this system is of a conventional type with gasoline injection, with an electronic control unit able to control the gasoline injection as a function of the various operative parameters of the system.

LPG is fed to rails 1 by means of a conduit 3 by a feeding pump 4 which draws LPG from a tank 5. Preferably, pump 4 is located within the tank 5. The portion of LPG which si fed in excess to the injectors 2 returns to tank 5 through a return line 6 in which there is not interposed any pressure regulator. However, line 6 ends with a non-return valve 7 adapted to prevent a flow within conduit 6 towards manifold 1.

Numeral 10 generally designates the main electronic control unit which controls operation of the injectors 2.

During operation of the engine, sensor 9 informs the control unit 10 about the LPG feeding pressure, which is a function of the temperature, so as to enable the injector activation time to be adjusted as a consequence. The elimination of the pressure regulator which was present in the previously proposed system obviously eliminates any risk of an engine malfunction due to the formation of steam bubbles within the regulator.

As in the previously proposed system, the activation time of injectors 2 is controlled by the conventional electronic control unit 10 which is provided for the gasoline injection system. In this case, however, the mode of operation of the control unit is modified by an auxiliary control unit 11, according to the LPG feeding characteristics.

As already indicated above, the gasoline feeding rail is separate from the LPG feeding rail, so as to avoid any complications in the system.

Naturally, while the principle of the invention remains the same, the details of construction and the embodiments may widely vary with respect to what has been disclosed by way of the example, without departing from the scope of the present invention.

## Claims

1. Internal combustion engine having a LPG feeding system, wherein said system comprises:
- a plurality of injectors (2) respectively associated with the various cylinders of the engine,
- a feeding manifold or "rail" (1) for feeding LPG to the injectors (2),
- a LPG tank (5),
- means for feeding LPG from the tank (5) to the feeding rail (1) while keeping the LPG substantially at a liquid state, said means including a pump (4) which feeds LPG from the tank to the rail,
- a return conduit (6) for taking the portion of LPG fed in excess to the injectors (2) back to the tank (5),
- sensor means (9) for sensing the pressure of the LPG fed to the injectors (2), and
- electronic control means for receiving signals coming from said sensor means (9) for sensing the pressure of LPG fed to the injectors (2) and controlling the injector activation time accordingly,
characterized in that said return conduit (6) is not provided with any pressure regulator and communicates with said tank through a non-return valve (7) adapted to prevent a flow within this conduit (6) towards said rail (1).

2. Internal combustion engine according to claim 1, adapted to operate selectively with gasoline or LPG, characterized in that said electronic control means comprises a first electronic control unit (10) of the type conventionally used in gasoline injection systems, for controlling the gasoline injection, and a second electronic control unit (11) adapted to modify the mode of operation of said first electronic control unit according to the LPG feeding characteristics, in order that said first control unit also controls the LPG injections.
